# EUROPÄISCHE PATENTANMELDUNG

(11) **EP 4 527 980 A2**
(43) Veröffentlichungstag der Anmeldung: **26.03.2025**
(21) Anmeldenummer: 25152993.9
(22) Anmeldetag: 06.04.2022
(51) Int. Cl.: C23C 30/00

(54) **MIT ELEMENTAREM SILBER UND ELEMENTAREM RUTHENIUM AUSGESTATTETES PARTIKELFÖRMIGES ANORGANISCHES MATERIAL**

(62) Teilanmeldung aus: 22166855.1
(71) Anmelder: Heraeus Precious Metals GmbH & Co. KG, 63450 Hanau (DE)
(72) Erfinder: Kovjenic, Milena, 63450 Hanau (DE); Meza-Chincha, Ana-Lucia, 63450 Hanau (DE); Harwardt, Marie-Lena, 63450 Hanau (DE); Gock, Michael, 63450 Hanau (DE); Hörteis, Matthias, 63450 Hanau (DE)
(74) Vertreter: Heraeus IP

(57) **Zusammenfassung**

Verfahren zur Herstellung eines mit elementarem Silber und elementarem Ruthenium ausgestatteten partikelförmigen anorganischen Materials mit einer durchschnittlichen Teilchengröße (d50) im Bereich von 50 nm bis 40 µm und einer BET-Oberfläche im Bereich von 1 bis 1600 m²/g, wobei das anorganische Material als solches ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid, und wobei eine getrocknete Zubereitung, welche vor ihrer Trocknung Wasser, Partikel aus einem entsprechenden anorganischen Material, mindestens einen Silbervorläufer und mindestens einen Rutheniumvorläufer umfasst hatte, unter einer reduzierenden Atmosphäre thermolytisch behandelt wird.

## Beschreibung

Die Erfindung betrifft mit elementarem Edelmetall in Form von elementarem Silber und elementarem Ruthenium ausgestattetes partikelförmiges anorganisches Material sowie zwei effiziente Verfahren zu seiner Herstellung.

Die WO 2021/084140 A2 offenbart ein Verfahren zur Herstellung eines mit elementarem Silber und elementarem Ruthenium ausgestatteten partikelförmigen Trägermaterials, welches als Additiv zur antimikrobiellen Ausrüstung verschiedenster Materialien und Werkstoffe verwendet werden kann.

Aufgabe der Erfindung war die Bereitstellung eines ausgeprägt antimikrobiell wirksamen Materials auf Basis eines mit elementarem Silber und elementarem Ruthenium ausgestatteten Trägermaterials.

Die Aufgabe kann gelöst werden durch Bereitstellung eines Produkts in Form eines mit elementarem Silber und elementarem Ruthenium ausgestatteten partikelförmigen anorganischen Materials mit einer durchschnittlichen Teilchengröße (d50) im Bereich von 50 nm bis 40 µm und einer BET-Oberfläche im Bereich von 1 bis 1600 m²/g, wobei das anorganische Material (das anorganische Material als solches) ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid (pyrogene Kieselsäure), gefälltem Siliziumdioxid (Fällungskieselsäure), Natriumaluminiumsilikat, Zirkoniumsilikat, Zeolith, Hydrotalkit und gamma-Aluminiumoxidhydroxid. Das erfindungsgemäße Produkt wird in der weiteren Folge auch kurz als "erfindungsgemäßes mit elementarem Silber und elementarem Ruthenium ausgestattetes partikelförmiges anorganisches Material" bezeichnet. Sein durch das elementare Silber und das elementare Ruthenium gebildeter Silber-plus-Ruthenium-Gewichtsanteil kann beispielsweise im Bereich von 0,1 bis 50 Gew.-% (Gewichts-%), bevorzugt 1 bis 40 Gew.-% liegen bei einem zugleich herrschenden Silber: Ruthenium-Gewichtsverhältnis beispielsweise im Bereich von 1 bis 2000 Gewichtsteilen Silber: 1 Gewichtsteil Ruthenium.

Bei dem partikelförmigen anorganischen Material beziehungsweise bei den Partikeln aus dem anorganischen Material handelt es sich um ein Trägermaterial für das elementare Silber und das elementare Ruthenium, d.h. in dem erfindungsgemäßen mit elementarem Silber und elementarem Ruthenium ausgestatteten partikelförmigen anorganischen Material fungiert das partikelförmige anorganische Material als Träger für das elementare Silber und das elementare Ruthenium. Üblicherweise und auch bevorzugt ist nur eine Art von Trägermaterial im erfindungsgemäßen mit elementarem Silber und elementarem Ruthenium ausgestatteten partikelförmigen anorganischen Material präsent.

Das erfindungsgemäße mit elementarem Silber und elementarem Ruthenium ausgestattete partikelförmige anorganische Material umfasst Partikel aus mit elementarem Silber und elementarem Ruthenium ausgestattetem anorganischem Material in einem Mengenanteil beispielsweise im Bereich von 95 bis 100 Gew.-%, insbesondere 100 Gew.-%. Der mögliche, jedoch nicht mehr als 5 Gew.-% ausmachende Mengenanteil kann durch entsprechende edelmetallfreie anorganische Partikel gebildet sein. Mit anderen Worten, das erfindungsgemäße mit elementarem Silber und elementarem Ruthenium ausgestattete partikelförmige anorganische Material kann zu 95 bis 100 Gew.-% aus Partikeln aus mit elementarem Silber und elementarem Ruthenium ausgestattetem anorganischem Material und zu 0 bis 5 Gew.-% aus entsprechenden edelmetallfreien anorganischen Partikeln bestehen, wobei sich die Gew.-% zu 100 Gew.-% addieren.

Der hierin verwendete Begriff "durchschnittliche Teilchengröße" bedeutet den mittels Laserbeugung bestimmbaren volumenmittleren Primärteilchendurchmesser (d50). Als Maß für den Teilchendurchmesser kann dabei zweckmäßig der sogenannte Equivalent Circular Area Diameter (ECAD) verwendet werden (vgl. RENLIANG XU ET AL: "Comparison of sizing small particles using different technologies", POWDER TECHNOLOGY, ELSEVIER, BASEL (CH), Bd. 132, Nr. 2-3, 24. Juni 2003 (2003-06-24), Seiten 145-153). Laserbeugungsmessungen können mit einem entsprechenden Teilchengrößenmessgerät, beispielsweise einem Mastersizer 3000 oder einem Mastersizer 2000 von Malvern Instruments nach der Nassbestimmungsmethode durchgeführt werden. Bei der Nassbestimmungsmethode kann partikelförmige Probe im Rahmen der Probenvorbereitung in Ethanol mittels Ultraschall dispergiert werden.

Der hierin verwendete Begriff "BET-Oberfläche" bezeichnet die spezifische Oberfläche, welche mittels BET-Messung gemäß DIN ISO 9277 : 2014-01 (gemäß Kapitel 6.3.1, statischvolumetrisches Messverfahren, verwendetes Gas: Stickstoff) bestimmt werden kann.

Die Erfindung betrifft auch zwei Verfahren zur Herstellung erfindungsgemäßen mit elementarem Silber und elementarem Ruthenium ausgestatteten partikelförmigen anorganischen Materials. Aus einem anderen Blickwinkel betrachtet können die beiden Verfahren auch verstanden werden als Verfahren zur Ausstattung entsprechenden partikelförmigen anorganischen Materials mit elementarem Silber und elementarem Ruthenium.

In dem ersten erfindungsgemäßen Verfahren kann das erfindungsgemäße mit elementarem Silber und elementarem Ruthenium ausgestattete partikelförmige anorganische Material erhalten werden durch Reduktion mindestens eines Silbervorläufers und mindestens eines Rutheniumvorläufers in Gegenwart wässrig suspendierter Partikel aus einem entsprechenden anorganischen Material, gefolgt von Abtrennen des dabei gebildeten Feststoffs von der wässrigen Phase, gegebenenfalls Waschen des abgetrennten Feststoffs mit Wasser und gegebenenfalls Trocknen des Feststoffs. Das erste erfindungsgemäße Verfahren umfasst demnach die Schritte: Reduzieren mindestens eines Silbervorläufers und mindestens eines Rutheniumvorläufers in Gegenwart wässrig suspendierter Partikel aus einem entsprechenden anorganischen Material, Abtrennen des im Zuge der Reduktion gebildeten Feststoffs von der wässrigen Phase, gegebenenfalls Waschen des abgetrennten Feststoffs mit Wasser und gegebenenfalls Trocknen des abgetrennten und gegebenenfalls gewaschenen Feststoffs. Bei der Reduktion können Silber- und Rutheniumvorläufer nacheinander oder bevorzugt zugleich reduziert werden.

Bei den im ersten erfindungsgemäßen Verfahren verwendeten Silbervorläufern und Rutheniumvorläufern handelt es sich um Silber- und Rutheniumverbindungen. Aus den Silber- und Rutheniumverbindungen kann durch Reduktion elementares Silber respektive elementares Ruthenium erzeugt werden.

Beispiele für geeignete Silberverbindungen umfassen Silberacetat, Silbersulfat und bevorzugt Silbernitrat.

Beispiele für geeignete Rutheniumverbindungen umfassen Rutheniumoxalat, Rutheniumacetat und insbesondere Rutheniumnitrosylnitrat.

Besonders bevorzugt wird bei dem ersten erfindungsgemäßen Verfahren eine Kombination von Silbernitrat und Rutheniumnitrosylnitrat als Kombination von Vorläuferverbindungen verwendet.

Bei den im ersten erfindungsgemäßen Verfahren verwendeten Partikeln aus einem anorganischen Material handelt es sich um Partikel mit einer durchschnittlichen Teilchengröße (d50) im Bereich von 50 nm bis 40 µm und einer BET-Oberfläche im Bereich von 1 bis 2000 m²/g, deren Material als solches ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid (pyrogene Kieselsäure), gefälltem Siliziumdioxid (Fällungskieselsäure), Natriumaluminiumsilikat, Zirkoniumsilikat, Zeolith, Hydrotalkit und gamma-Aluminiumoxidhydroxid. Mit anderen Worten, die Partikel bestehen aus einem Material, das ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid. Bevorzugt sind entsprechende Partikel aus Titannitrid, alpha-Aluminiumoxid, Titandioxid in Form von Anatas oder Rutil, pyrogenem oder gefälltem Siliziumdioxid und gamma-Aluminiumoxidhydroxid.

Die im ersten erfindungsgemäßen Verfahren stattfindende Reduktion kann bei einem basischen pH-Wert im Bereich von 9 bis 14, bevorzugt von 10 bis 12, und bei einer geeigneten Temperatur mit einem Reduktionsmittel ausgewählt aus der Gruppe bestehend aus Natriumborhydrid, Hydrazin, Hypophosphiten und Formiaten erfolgen. Mit Natriumborhydrid respektive Hydrazin kann beispielsweise zweckmäßig im Temperaturbereich 20 bis 40°C gearbeitet werden; mit Hypophosphiten respektive Formiaten kann beispielsweise zweckmäßig im Temperaturbereich 60 bis 90°C gearbeitet werden.

Hydrazin kann als solches eingesetzt werden, bevorzugt jedoch als Hydrazinhydrat mit einem Hydrazingehalt im Bereich von 30 bis 65 Gew.-%. Hydrazin kann auch als Hydraziniumsalz, beispielsweise als Hydraziniumsulfat eingesetzt werden. Bevorzugt wird mit Hydrazinhydrat gearbeitet.

Hierin werden Hypophosphite und Formiate erwähnt. Dabei handelt es sich um Salze, insbesondere Alkalisalze, Erdalkalisalze und Ammoniumsalze (NH₄-Salze). Bevorzugt sind Natriumhypophosphit und Kaliumhypophosphit respektive Natriumformiat und Kaliumformiat.

Das oder die Reduktionsmittel werden im ersten erfindungsgemäßen Verfahren in zur vollständigen Reduktion der Silber- und Rutheniumvorläufer zu elementarem Silber und elementarem Ruthenium stöchiometrisch notwendigen Menge oder mehr, bevorzugt jedoch in nicht mehr als 110% (Hydrazin als Reduktionsmittel) oder in nicht mehr als 200% (Natriumborhydrid, Hypophosphite oder Formiate als Reduktionsmittel) der stöchiometrisch notwendigen Menge verwendet. Am Beispiel Hydrazin erläutert bedeutet dies: 1 mol des Reduktionsmittels Hydrazin kann 4 mol reduzierend wirkende Elektronen liefern und setzt dementsprechend bei einer Reduktion 1 mol N₂ frei; dementsprechend benötigt man beispielsweise zur Reduktion von 1 mol Ag⁺ 0,25 mol Hydrazin und zur Reduktion von 1 mol Ru³⁺ 0,75 mol Hydrazin.

In der weiteren Folge werden zwei Ausgestaltungen des ersten erfindungsgemäßen Verfahrens zur Herstellung des erfindungsgemäßen mit elementarem Silber und elementarem Ruthenium ausgestatteten partikelförmigen anorganischen Materials offenbart.

In einer ersten Ausgestaltung umfasst das erste erfindungsgemäße Herstellungsverfahren die aufeinanderfolgenden Schritte:
(1a) Bereitstellen einer wässrigen Suspension umfassend Wasser, Partikel aus einem anorganischen Material, mindestens einen Silbervorläufer und mindestens einen Rutheniumvorläufer,
(2a) Inkontaktbringen der wässrigen Suspension bei einem basischen pH-Wert wie vorerwähnt und bei einer geeigneten Temperatur wie vorerwähnt mit einem Reduktionsmittel ausgewählt aus der Gruppe bestehend aus Natriumborhydrid, Hydrazin, Hypophosphiten und Formiaten,
(3) Abtrennen des gebildeten Feststoffs von der wässrigen Phase,
(4) gegebenenfalls Waschen des abgetrennten Feststoffs mit Wasser, und
(5) gegebenenfalls Trocknen des Feststoffs.

Bei der Schrittfolge (1a) bis (5) handelt es sich um aufeinanderfolgende Schritte, und es kann sich dabei um direkt aufeinanderfolgende Schritte ohne Zwischenschritte handeln.

In Schritt (1a) der ersten Ausgestaltung des ersten erfindungsgemäßen Verfahrens wird eine wässrige Suspension umfassend Wasser, Partikel aus einem anorganischen Material, mindestens einen Silbervorläufer und mindestens einen Rutheniumvorläufer bereitgestellt.

Die Herstellung der wässrigen Suspension kann erfolgen, indem Partikel aus dem anorganischen Material zu einer wässrigen Lösung des mindestens einen Silbervorläufers als auch des mindestens einen Rutheniumvorläufers zugegeben und darin suspendiert werden.

Bevorzugt wird jedoch so gearbeitet, dass Silbervorläufer und Rutheniumvorläufer - bevorzugt jeweils als wässrige Lösung - zugleich oder in beliebiger Reihenfolge (zeitversetzt überlappend, alternierend oder nacheinander) zu einer vorgelegten wässrigen Suspension von Partikeln aus dem anorganischen Material zugegeben werden. Besonders bevorzugt ist es, dass eine wässrige Lösung beider Vorläufer (des mindestens einen Silbervorläufers als auch des mindestens einen Rutheniumvorläufers) zu einer vorgelegten wässrigen Suspension von Partikeln aus dem anorganischen Material zugegeben wird. Im Allgemeinen wird während und auch noch nach der Zugabe vermischt, beispielsweise durch Rühren. Es kann auch zweckmäßig sein, das Vermischen bei einem pH-Wert der wässrigen Suspension durchzuführen, der im Bereich des im Folgeschritt (2a) herrschenden pH-Wert-Bereiches liegt; zu dem Zweck kann Base, insbesondere Alkalihydroxid, speziell Natrium- oder Kaliumhydroxid, zur entsprechenden pH-Wert-Einstellung zugegeben werden.

Der Gewichtsanteil der Partikel aus dem anorganischen Material der in Schritt (1a) der ersten Ausgestaltung des ersten erfindungsgemäßen Verfahrens bereitgestellten wässrigen Suspension kann beispielsweise im Bereich von 5 bis 30 Gew.-% liegen.

Der aus Silber und Ruthenium gebildete Edelmetall-Gewichtsanteil der in Schritt (1a) der ersten Ausgestaltung des ersten erfindungsgemäßen Verfahrens bereitgestellten wässrigen Suspension kann beispielsweise im Bereich von 1 bis 20 Gew.-% liegen. Die in Schritt (1a) der ersten Ausgestaltung des ersten erfindungsgemäßen Verfahrens bereitgestellte wässrige Suspension zeichnet sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Partikeln aus dem anorganischen Material und den Edelmetallvorläufern umfasst die in Schritt (1a) der ersten Ausgestaltung des ersten erfindungsgemäßen Verfahrens bereitgestellte wässrige Suspension im Allgemeinen nur Wasser und gegebenenfalls zur pH-Wert-Einstellung verwendete Base.

In Schritt (2a) der ersten Ausgestaltung des ersten erfindungsgemäßen Verfahrens wird die in Schritt (1a) bereitgestellte wässrige Suspension mit einem Reduktionsmittel ausgewählt aus der Gruppe bestehend aus Natriumborhydrid, Hydrazin, Hypophosphiten und Formiaten bei einem basischen pH-Wert wie vorerwähnt und bei einer geeigneten Temperatur wie vorerwähnt in Kontakt gebracht. Falls notwendig kann dabei zunächst ein entsprechender pH-Wert sowie eine entsprechende Temperatur der wässrigen Suspension eingestellt werden. Der basische pH-Wert kann mit einer Base, insbesondere mit Alkalihydroxid, speziell Natrium- oder Kaliumhydroxid, eingestellt werden. Das Reduktionsmittel wird dabei in zur vollständigen Reduktion der Silber- und Rutheniumvorläufer zu elementarem Silber und elementarem Ruthenium stöchiometrisch notwendigen Menge oder mehr verwendet, wie vorerwähnt. Bevorzugt wird so gearbeitet, dass das Reduktionsmittel in Form einer wässrigen Lösung zu der wässrigen Suspension zugegeben wird. Die Zugabe erfolgt bevorzugt über einen Zeitraum von 10 bis 60 Minuten. Zweckmäßig wird während und im Allgemeinen auch noch nach der Zugabe vermischt, beispielsweise durch Rühren.

In einer zweiten Ausgestaltung umfasst das erste erfindungsgemäße Herstellungsverfahren die aufeinanderfolgenden Schritte:
(1b) Bereitstellen einer wässrigen basischen Suspension umfassend Wasser, Partikel aus einem anorganischen Material, Base und ein Reduktionsmittel ausgewählt aus der Gruppe bestehend aus Natriumborhydrid, Hydrazin, Hypophosphiten und Formiaten,
(2b) Inkontaktbringen der wässrigen Suspension bei einem basischen pH-Wert wie vorerwähnt und bei einer geeigneten Temperatur wie vorerwähnt (i) mit einer wässrigen Lösung umfassend mindestens einen Silbervorläufer und mindestens einen Rutheniumvorläufer oder (ii) mit einer wässrigen Lösung umfassend mindestens einen Silbervorläufer und anschließend mit einer wässrigen Lösung umfassend mindestens einen Rutheniumvorläufer oder (iii) mit einer wässrigen Lösung umfassend mindestens einen Rutheniumvorläufer und anschließend mit einer wässrigen Lösung umfassend mindestens einen Silbervorläufer,
(3) Abtrennen des gebildeten Feststoffs von der wässrigen Phase,
(4) gegebenenfalls Waschen des abgetrennten Feststoffs mit Wasser, und
(5) gegebenenfalls Trocknen des Feststoffs.

Bei der Schrittfolge (1b) bis (5) handelt es sich um aufeinanderfolgende Schritte, und es kann sich dabei um direkt aufeinanderfolgende Schritte ohne Zwischenschritte handeln.

In Schritt (1b) der zweiten Ausgestaltung des ersten erfindungsgemäßen Verfahrens wird eine wässrige basische Suspension umfassend Wasser, Partikel aus einem anorganischen Material, Base und ein Reduktionsmittel ausgewählt aus der Gruppe bestehend aus Natriumborhydrid, Hydrazin, Hypophosphiten und Formiaten bereitgestellt. Die Herstellung der wässrigen basischen Suspension kann erfolgen, indem Partikel aus dem anorganischen Material zu einer wässrigen Lösung des Reduktionsmittels zugegeben und darin suspendiert werden. Bevorzugt wird jedoch so gearbeitet, dass das Reduktionsmittel - bevorzugt als wässrige Lösung - zu einer vorgelegten wässrigen Suspension von Partikeln aus dem anorganischen Material zugegeben wird. Der basische pH-Wert kann mit einer Base, insbesondere mit Alkalihydroxid, speziell Natrium- oder Kaliumhydroxid, eingestellt werden, zweckmäßig im Bereich des im Folgeschritt (2b) herrschenden pH-Wert-Bereiches. Zweckmäßig wird während und im Allgemeinen auch noch nach der Zugabe vermischt, beispielsweise durch Rühren.

Der Gewichtsanteil der Partikel aus dem anorganischen Material der in Schritt (1b) der zweiten Ausgestaltung des ersten erfindungsgemäßen Verfahrens bereitgestellten wässrigen Suspension kann beispielsweise im Bereich von 5 bis 30 Gew.-% liegen.

Der Gewichtsanteil des Reduktionsmittels der in Schritt (1b) der zweiten Ausgestaltung des ersten erfindungsgemäßen Verfahrens bereitgestellten wässrigen Suspension kann beispielsweise im Bereich von 0,5 bis 10 Gew.-% liegen.

Neben den Partikeln aus dem anorganischen Material und dem Reduktionsmittel umfasst die in Schritt (1b) der zweiten Ausgestaltung des ersten erfindungsgemäßen Verfahrens bereitgestellte wässrige Suspension im Allgemeinen nur Wasser und zur pH-Wert-Einstellung verwendete Base.

In Schritt (2b) der zweiten Ausgestaltung des ersten erfindungsgemäßen Verfahrens wird die in Schritt (1b) bereitgestellte wässrige Suspension bei einem basischen pH-Wert wie vorerwähnt und bei einer geeigneten Temperatur wie vorerwähnt (i) mit einer wässrigen Lösung umfassend mindestens einen Silbervorläufer und mindestens einen Rutheniumvorläufer oder (ii) mit einer wässrigen Lösung umfassend mindestens einen Silbervorläufer und anschließend mit einer wässrigen Lösung umfassend mindestens einen Rutheniumvorläufer oder (iii) mit einer wässrigen Lösung umfassend mindestens einen Rutheniumvorläufer und anschließend mit einer wässrigen Lösung umfassend mindestens einen Silbervorläufer in Kontakt gebracht. Das eine Reduktionsmittel wird dabei in zur vollständigen Reduktion der Silber- und Rutheniumvorläufer zu elementarem Silber und elementarem Ruthenium stöchiometrisch notwendigen Menge oder mehr verwendet, wie vorerwähnt. Bevorzugt wird gemäß Variante (i) gearbeitet.

Der aus Silber und Ruthenium gebildete Edelmetall-Gewichtsanteil der in Schritt (1b) der zweiten Ausgestaltung des ersten erfindungsgemäßen Verfahrens bereitgestellten wässrigen

Suspension kann beispielsweise im Bereich von 1 bis 20 Gew.-% liegen. Die in Schritt (1b) der zweiten Ausgestaltung des ersten erfindungsgemäßen Verfahrens bereitgestellte wässrige Suspension zeichnet sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Zweckmäßig wird während und im Allgemeinen auch noch nach dem in Kontakt bringen gemäß Schritt (2b) vermischt, beispielsweise durch Rühren, beispielsweise über einen Zeitraum von 1 bis 2 Stunden.

Die Schritte (3) bis (5) sind bei beiden Ausgestaltungen des ersten erfindungsgemäßen Verfahrens gleich.

In Schritt (3) wird der in den jeweiligen Schritten (2a) respektive (2b) gebildete Feststoff von der wässrigen Phase abgetrennt. Beispiele für dazu geeignete Fest-Flüssig-Trennverfahren umfassen dem Fachmann bekannte Methoden wie Dekantieren, Auspressen, Filtrieren, Abnutschen, Zentrifugieren oder Kombinationen davon.

Schritt (4) des ersten erfindungsgemäßen Verfahrens ist ein optionaler, jedoch im Allgemeinen zweckmäßiger Schritt, in dem der in Schritt (3) abgetrennte Feststoff mit Wasser gewaschen werden kann. Dabei können wasserlösliche Bestandteile entfernt werden. Das Waschen kann beispielsweise auf einer Nutsche geschehen.

Schritt (5) des ersten erfindungsgemäßen Verfahrens ist ein optionaler, jedoch im Allgemeinen zweckmäßiger Schritt, in dem der in Schritt (3) abgetrennte und gegebenenfalls in Schritt (4) gewaschene Feststoff getrocknet werden kann. Dabei werden Wasser und eventuell vorhandene andere flüchtige Bestandteile aus dem nach Beendigung von Schritt (3) respektive Schritt (4) erhaltenen Feststoff entfernt. Das Entfernen des Wassers kann im Sinne einer praktisch vollständigen Befreiung von Wasser oder im Sinne einer Wasserentfernung bis zum Erreichen eines gewünschten Restfeuchtegehalts erfolgen. Dazu kann zunächst der Großteil des Wassers nach üblichen Verfahren wie Auspressen, Pressfiltration, Abnutschen, Zentrifugieren oder ähnlich wirkenden Verfahren entfernt werden, bevor man eine gegebenenfalls durch verminderten Druck unterstützte Trocknung bei Temperaturen beispielsweise im Bereich von 20 bis 150 °C anschließt.

Nach Beendigung von Schritt (3) oder gegebenenfalls (4) oder gegebenenfalls (5) sowie gegebenenfalls einem sich anschließenden Zerkleinern und/oder Klassieren erhält man das erfindungsgemäße mit elementarem Silber und elementarem Ruthenium ausgestattete partikelförmige anorganische Material. Das Silber und das Ruthenium können dabei auf inneren Oberflächen (innerhalb von Poren und/oder Hohlräumen) und/oder auf der äußeren Oberfläche der ursprünglich silber- und rutheniumfreien Partikel aus dem anorganischen Material vorliegen und dabei beispielsweise eine diskontinuierliche Schicht und/oder kleine Silber- respektive Rutheniumpartikel (Silber- respektive Rutheniuminseln) ausbilden. Die Rasterelektronenmikroskopie kann eine geeignete Methode zur Betrachtung solcher morphologischer Eigenschaften sein. Das Silber und das Ruthenium liegen nicht legiert, sondern statistisch verteilt vor und beide Edelmetalle stehen mindestens zum Teil in Kontakt miteinander. Für den Fachmann ist klar, dass das Silber und das Ruthenium an seiner Oberfläche andere Silberspezies als elementares metallisches Silber und andere Rutheniumspezies als elementares metallisches Ruthenium umfassen kann, beispielsweise entsprechende Oxide, Halogenide und/oder Sulfide. Derartige Spezies können während der Durchführung des ersten erfindungsgemäßen Verfahrens oder im Anschluss daran gebildet werden, beispielsweise während Lagerung, Verwendung oder Weiterverarbeitung des erfindungsgemäßen mit elementarem Silber und elementarem Ruthenium ausgestatteten partikelförmigen anorganischen Materials.

In dem zweiten erfindungsgemäßen Verfahren kann das erfindungsgemäße mit elementarem Silber und elementarem Ruthenium ausgestattete partikelförmige anorganische Material erhalten werden im Wege einer unter reduzierender Atmosphäre stattfindenden thermolytischen Behandlung einer zuvor getrockneten Zubereitung, welche vor ihrer Trocknung Wasser, Partikel aus einem entsprechenden anorganischen Material, mindestens einen Silbervorläufer und mindestens einen Rutheniumvorläufer umfasst hatte.

In dem zweiten erfindungsgemäßen Verfahren werden Partikel aus einem anorganischen Material, Silbervorläufer und Rutheniumvorläufer verwendet.

Bei den im zweiten erfindungsgemäßen Verfahren verwendeten Silbervorläufern und Rutheniumvorläufern handelt es sich um unter reduzierender Atmosphäre thermisch zu elementarem Silber respektive elementarem Ruthenium zersetzbare Silber- und Rutheniumverbindungen.

Beispiele für geeignete Silberverbindungen umfassen Silberacetat und bevorzugt Silbernitrat.

Beispiele für geeignete Rutheniumverbindungen umfassen Rutheniumoxalat, Rutheniumacetat und insbesondere Rutheniumnitrosylnitrat.

Besonders bevorzugt wird bei dem zweiten erfindungsgemäßen Verfahren eine Kombination von Silbernitrat und Rutheniumnitrosylnitrat als Kombination von Vorläuferverbindungen verwendet.

Bei den im zweiten erfindungsgemäßen Verfahren verwendeten Partikeln aus einem anorganischen Material handelt es sich um Partikel mit einer durchschnittlichen Teilchengröße (d50) im Bereich von 50 nm bis 40 µm und einer BET-Oberfläche im Bereich von 1 bis 2000 m²/g, deren Material als solches ausgewählt ist aus einem Material ausgewählt aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid. Mit anderen Worten, die Partikel bestehen aus einem Material, das ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid. Bevorzugt sind entsprechende Partikel aus Titannitrid, alpha-Aluminiumoxid, Titandioxid in Form von Anatas oder Rutil, pyrogenem oder gefälltem Siliziumdioxid und gamma-Aluminiumoxidhydroxid.

Das zweite erfindungsgemäße Herstellungsverfahren umfasst die aufeinanderfolgenden Schritte:
(1c) Bereitstellen einer Zubereitung umfassend Wasser, Partikel aus einem anorganischen Material, mindestens einen Silbervorläufer und mindestens einen Rutheniumvorläufer,
(2c) Trocknen der in Schritt (1c) bereitgestellten Zubereitung, und
(3c) thermolytische Behandlung der nach Beendigung von Schritt (2c) erhaltenen getrockneten Zubereitung unter reduzierender Atmosphäre.

Bei der Schrittfolge (1c) bis (3c) handelt es sich um aufeinanderfolgende Schritte, und es kann sich dabei um direkt aufeinanderfolgende Schritte ohne Zwischenschritte handeln.

In Schritt (1c) des zweiten erfindungsgemäßen Verfahrens wird eine Zubereitung bereitgestellt, welche Wasser, Partikel aus einem anorganischen Material, mindestens einen Silbervorläufer und mindestens einen Rutheniumvorläufer umfasst. Die Zubereitung kann entweder in Form einer wässrigen Suspension oder in Form imprägnierter Partikel vorliegen. Die beiden Formen (a) wässrige Suspension versus (b) imprägnierte Partikel unterscheiden sich durch das Vorhandensein respektive Nichtvorhandensein von wässriger Flüssigkeit zwischen den Partikeln; während im Falle der wässrigen Suspension wässrige Flüssigkeit zwischen den Partikeln vorliegt, ist dies bei den imprägnierten Partikeln nicht der Fall, letztere haben die Erscheinungsform trockenen respektive frei fließfähigen Pulvers und die wässrige Flüssigkeit bildet einen Bestandteil der Partikel bzw. befindet sich innerhalb der Partikel.

Die Herstellung der wässrigen Suspension kann erfolgen, indem die Partikel aus dem anorganischen Material zu einer wässrigen Lösung des mindestens einen Silbervorläufers als auch des mindestens einen Rutheniumvorläufers zugegeben und darin suspendiert werden.

Bevorzugt wird jedoch so gearbeitet, dass Silbervorläufer und Rutheniumvorläufer - bevorzugt jeweils als wässrige Lösung - zugleich oder in beliebiger Reihenfolge (zeitversetzt überlappend, alternierend oder nacheinander) zu einer vorgelegten wässrigen Suspension von Partikeln aus dem anorganischen Material zugegeben werden. Besonders bevorzugt ist es, dass eine wässrige Lösung beider Vorläufer (des mindestens einen Silbervorläufers als auch des mindestens einen Rutheniumvorläufers) zu einer vorgelegten wässrigen Suspension von Partikeln aus dem anorganischen Material zugegeben wird. Im Allgemeinen wird während und auch noch nach der Zugabe vermischt, beispielsweise durch Rühren.

Der Gewichtsanteil der Partikel aus dem anorganischen Material der in Schritt (1c) des zweiten erfindungsgemäßen Verfahrens bereitgestellten wässrigen Suspension kann beispielsweise im Bereich von 5 bis 30 Gew.-% liegen.

Der aus Silber und Ruthenium gebildete Edelmetall-Gewichtsanteil der in Schritt (1c) des zweiten erfindungsgemäßen Verfahrens bereitgestellten wässrigen Suspension kann beispielsweise im Bereich von 1 bis 20 Gew.-% liegen. Die in Schritt (1c) des zweiten erfindungsgemäßen Verfahrens bereitgestellte wässrige Suspension zeichnet sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Partikeln aus dem anorganischen Material und den Edelmetallvorläufern umfasst die in Schritt (1c) des zweiten erfindungsgemäßen Verfahrens bereitgestellte wässrige Suspension im Allgemeinen nur Wasser und gegebenenfalls korrespondierende Säure aus den Edelmetallvorläufern.

Die Herstellung der Zubereitung in Form imprägnierter Partikel ist bevorzugt. Sie kann erfolgen, indem die Partikel aus dem anorganischen Material mit einer wässrigen Lösung des mindestens einen Silbervorläufers als auch des mindestens einen Rutheniumvorläufers in fachüblicher Weise imprägniert werden. Der Imprägniervorgang kann dabei einmalig oder wiederholt durchgeführt werden, im letzteren Fall jeweils mit einem zwischen den einzelnen Imprägnierschritten stattfindenden Trockungsschritt.

Beim Imprägnieren ist so vorzugehen, dass keine wässrige Suspension, d.h. weder eine dünnflüssige Aufschlämmung noch eine brei-, pasten- oder teigförmige Masse entsteht, sondern imprägnierte Partikel in Form eines makroskopisch betrachtet homogenen und frei fließfähigen Pulvers gebildet werden. Mit anderen Worten, das Volumen an wässriger Lösung muss entsprechend gering und passend zu den damit zu imprägnierenden Partikeln aus dem anorganischen Material gewählt werden. Bei Durchführung der Imprägnierung ist es zweckmäßig, dem Vermischen der Partikel aus dem anorganischen Material und der wässrigen Lösung hinreichend Zeit zu gewähren. Beispielsweise kann es zweckmäßig sein, hinreichend lange zu vermischen, insbesondere bis besagter makroskopisch betrachtet homogener Zustand des Mischgutes erreicht ist. Das Volumen der wässrigen Lösung kann über die jeweilige Konzentration der Edelmetallvorläufer an die damit in Kontakt zu bringende Menge der Partikel aus dem anorganischen Material und deren Aufnahmeverhalten für die wässrige Lösung angepasst gewählt werden. Bei zu groß gewähltem Volumen entstehen die vorerwähnten unerwünschten Aufschlämmungen, Breie, Teige oder Pasten. Der Fachmann kann das Aufnahmeverhalten betreffender Partikel aus einem anorganischen Material für eine betreffende wässrige Lösung in orientierenden Laborversuchen leicht ermitteln und so die Obergrenze in Liter wässriger Lösung pro Kilogramm Partikel aus dem anorganischen Material bestimmen, ohne dass ein Verlust besagter freier Fließfähigkeit eintritt.

Der Gewichtsanteil der Partikel aus dem anorganischen Material der in Schritt (1c) des zweiten erfindungsgemäßen Verfahrens bereitgestellten imprägnierten Partikel kann beispielsweise im Bereich von 50 bis 90 Gew.-% liegen.

Der aus Silber und Ruthenium gebildete Edelmetall-Gewichtsanteil der in Schritt (1c) des zweiten erfindungsgemäßen Verfahrens bereitgestellten imprägnierten Partikel kann beispielsweise im Bereich von 3 bis 15 Gew.-% liegen. Die in Schritt (1c) des zweiten erfindungsgemäßen Verfahrens bereitgestellten imprägnierten Partikel zeichnen sich aus durch ein Gewichtsverhältnis der beiden Edelmetalle beispielsweise im Bereich von 1 bis 2000 Gewichtsteilen Silber: 1 Gewichtsteil Ruthenium und dabei im Allgemeinen deutlich zugunsten des Silbers gelagert.

Neben den Partikeln aus dem anorganischen Material und den Edelmetallvorläufern umfassen die in Schritt (1c) des zweiten erfindungsgemäßen Verfahrens bereitgestellten imprägnierten Partikel im Allgemeinen nur Wasser und gegebenenfalls korrespondierende Säure aus den Edelmetallvorläufern. Der Wassergehalt der in Schritt (1c) des zweiten erfindungsgemäßen Verfahrens bereitgestellten imprägnierten Partikel kann beispielsweise im Bereich von 7 bis 35 Gew.-% liegen.

In Schritt (2c) des zweiten erfindungsgemäßen Verfahrens wird die in Schritt (1c) bereitgestellte Zubereitung getrocknet, d.h. von Wasser und gegebenenfalls vorhandenen weiteren flüchtigen Substanzen befreit.

Im Fall der wässrigen Suspension wird diese bis zur Trockne eingeengt. Zweckmäßig wird die wässrige Suspension während des Einengens bewegt, beispielsweise durch Rühren und/oder Schütteln und/oder Rotation, d.h. Rotation des die wässrige Suspension beinhaltenden Gefäßes oder Behältnisses. Im Allgemeinen wird während des Einengens erwärmt und/oder Unterdruck angelegt, um Wasser und gegebenenfalls vorhandene weitere flüchtige Substanzen zu entfernen. Während des Einengens kann bei einer Temperatur beispielsweise im Bereich von 40 bis 95 °C gearbeitet werden. Das nach Erreichen der Trockne erhaltene Material kann bei Bedarf zerkleinert werden.

Im Fall der imprägnierten Partikel können diese in einem Ofen getrocknet werden bei einer Temperatur beispielsweise im Bereich von 40 bis 95 °C. Unterstützend kann Unterdruck angelegt werden. Das so getrocknete Material kann bei Bedarf zerkleinert werden.

In Schritt (3c) des zweiten erfindungsgemäßen Verfahrens werden die Edelmetallvorläufer thermisch unter Bildung von elementarem Silber und elementarem Ruthenium zersetzt. Dazu wird das nach Beendigung von Schritt (2c) erhaltene und gegebenenfalls zerkleinerte Material einer thermolytischen Behandlung unter reduzierender Atmosphäre unterworfen. Zu dem Zweck kann das Material unbewegt oder bewegt auf eine thermische Zersetzung der Edelmetallvorläufer zum jeweiligen elementaren Edelmetall gewährleistende Objekttemperatur beispielsweise im Bereich von 150 bis 800°C erhitzt werden, beispielsweise in einem statischen Ofen, einem Wirbelschichtreaktor oder einem Drehrohrofen.

Der hierin verwendete Begriff "reduzierende Atmosphäre" bezeichnet eine Atmosphäre bestehend aus einem reduzierende Eigenschaften aufweisenden Gas wie beispielsweise Wasserstoff oder eine Mischung von inertem Gas wie Stickstoff oder Argon mit Wasserstoff, letzterer mit einem Volumenanteil insbesondere im Bereich von 5 bis 10 Vol.-%. Zweckmäßig wird der Ofenraum während Schritt (3c) mit dem reduzierende Eigenschaften aufweisenden Gas gespült respektive durchströmt; der Gasstrom kann dabei auch dem Austrag von gasförmigen Zersetzungsprodukten dienen.

Nach Beendigung von Schritt (3c) sowie gegebenenfalls einem sich anschließenden Zerkleinern und/oder Klassieren erhält man das erfindungsgemäße mit elementarem Silber und elementarem Ruthenium ausgestattete partikelförmige anorganische Material. Das Silber und das Ruthenium können dabei auf inneren Oberflächen (innerhalb von Poren und/oder Hohlräumen) und/oder auf der äußeren Oberfläche der ursprünglich silber- und rutheniumfreien Partikel aus dem anorganischen Material vorliegen und dabei beispielsweise eine diskontinuierliche Schicht und/oder kleine Silber- respektive Rutheniumpartikel (Silberrespektive Rutheniuminseln) ausbilden. Die Rasterelektronenmikroskopie kann eine geeignete Methode zur Betrachtung solcher morphologischer Eigenschaften sein. Das Silber und das Ruthenium liegen nicht legiert, sondern statistisch verteilt vor und beide Edelmetalle stehen dabei mindestens zum Teil in Kontakt miteinander. Für den Fachmann ist klar, dass das Silber und das Ruthenium an seiner Oberfläche andere Silberspezies als elementares metallisches Silber und andere Rutheniumspezies als elementares metallisches Ruthenium umfassen kann, beispielsweise entsprechende Oxide, Halogenide und/oder Sulfide. Derartige Spezies können während der Durchführung des zweiten erfindungsgemäßen Verfahrens oder im Anschluss daran gebildet werden, beispielsweise während Lagerung, Verwendung oder Weiterverarbeitung des erfindungsgemäßen mit elementarem Silber und elementarem Ruthenium ausgestatteten partikelförmigen anorganischen Materials.

Erfindungsgemäßes mit elementarem Silber und elementarem Ruthenium ausgestattetes partikelförmiges anorganisches Material zeichnet sich aus durch eine dunkle bzw. schwarze Farbe mit einer dementsprechend geringen Helligkeit L* beispielsweise im Bereich von 35 bis 45, was für manche Anwendungen störend sein kann. Bei der Helligkeit L* handelt es sich um spektralphotometrisch bei einer Messgeometrie von d/8° bestimmtes L* im CIEL*a*b*-Farbraum (DIN EN ISO/CIE 11664-4:2020-03); die spektralphotometrische Messung des erfindungsgemäßen mit elementarem Silber und elementarem Ruthenium ausgestatteten partikelförmigen anorganischen Materials kann an einer mit 1 cm Füllhöhe in ein farbloses Glasgefäß eingefüllten Probe durch den ebenen Glasboden des auf den Messkopf des verwendeten Spektralphotometers gestellten Glasgefäßes hindurch durchgeführt werden.

Falls gewünscht kann erfindungsgemäßes mit elementarem Silber und elementarem Ruthenium ausgestattetes partikelförmiges anorganisches Material zu einem aufgehellten partikelförmigen Material mit einer Helligkeit L* beispielsweise im Bereich von 50 bis 85 weiterverarbeitet werden. Zum Zweck der Aufhellung kann das erfindungsgemäße mit elementarem Silber und elementarem Ruthenium ausgestattete partikelförmige anorganische Material mit mindestens einem C1-C4-Alkoxid von Aluminium, Magnesium, Calcium, Silizium, Zink, Zirkonium und/oder Titan in Gegenwart einer zur vollständigen Hydrolyse des mindestens einen C1-C4-Alkoxids mindestens hinreichenden Menge von Wasser in Kontakt gebracht werden. Dabei kann wie gesagt ein aufgehelltes partikelförmiges Material, d.h. ein partikelförmiges Material mit einer Farbe, beispielsweise mit einer grauen Farbe, mit einer Helligkeit L* beispielsweise im Bereich von 50 bis 85 gebildet werden. Dieses aufgehellte partikelförmige Material besteht aus dem erfindungsgemäßen mit elementarem Silber und elementarem Ruthenium ausgestatteten partikelförmigen anorganischen Material mit einem zumindest anteilig darauf befindlichen Feststoff. Abhängig von der Wahl des mindestens einen C1-C4-Alkoxids handelt es sich bei dem Feststoff um einen Feststoff ausgewählt aus der Gruppe bestehend aus Aluminiumoxid, Aluminiumhydroxid, Aluminiumoxidhydroxid, Magnesiumoxid, Magnesiumhydroxid, Magnesiumoxidhydroxid, Calciumoxid, Calciumhydroxid, Calciumoxidhydroxid, Siliziumdioxid, Kieselsäure, Zinkoxid, Zinkhydroxid, Zinkoxidhydroxid, Zirkoniumdioxid, Zirkonium(IV)oxidhydraten, Titandioxid, Titan(IV)oxidhydraten und Kombinationen davon.

Das erfindungsgemäße mit elementarem Silber und elementarem Ruthenium ausgestattete partikelförmige anorganische Material - gegebenenfalls wie vorerwähnt aufgehellt - zeichnet sich durch eine besonders ausgeprägte antimikrobielle Wirkung aus, wie in üblichen Hemmhof-Tests oder durch Bestimmung der minimalen Hemmkonzentration aus Wachstumskurven von Mikroorganismen festgestellt werden kann. Die Erfindung betrifft insofern auch die Verwendung des gegebenenfalls aufgehellten, erfindungsgemäßen mit elementarem Silber und elementarem Ruthenium ausgestatteten partikelförmigen anorganischen Materials als Additiv zur antimikrobiellen Ausrüstung von Metalloberflächen; Beschichtungsmitteln wie Lacken und anderen Anstrichmitteln; Putzen; Formmassen; Kunststoffen in Gestalt von Kunststofffolien, Kunststoffteilen oder Kunststofffasern; Textilien respektive textilen Anwendungen; Kunstharzprodukten; lonenaustauscherharzen; Silikonprodukten; Cellulose-basierenden Produkten; Schaumstoffen; Kosmetika; und vielem anderen mehr.

Das erfindungsgemäße mit elementarem Silber und elementarem Ruthenium ausgestattete partikelförmige anorganische Material - gegebenenfalls wie vorerwähnt aufgehellt - kann im Übrigen auch als heterogener Katalysator verwendet werden, beispielsweise bei der Katalyse der Bildung von Hydroxylradikalen innerhalb von wässrigen, ein Bakterienwachstum erlaubenden Medien.

Das erfindungsgemäße mit elementarem Silber und elementarem Ruthenium ausgestattete partikelförmige anorganische Material - gegebenenfalls wie vorerwähnt aufgehellt - kann bei den vorerwähnten Verwendungen als trockenes Pulver, als restfeuchtes oder einen gewünschten Feuchtegehalt aufweisendes Pulver oder als wässrige Suspension eingesetzt werden.

### Beispiele

### Referenzbeispiel 1 (Reduktive Herstellung eines mit 18,9 Gew.-% elementarem Silber und 1,0 Gew.-% elementarem Ruthenium ausgestatteten Cellulosepulvers):

75,6 g (445 mmol) festes Silbernitrat und 13,94 g Rutheniumnitrosylnitrat-Lösung (Rutheniumanteil 19,0 Gew.-%; 26,2 mmol Ru) wurden in 416,8 g VE-Wasser gelöst und die so erhaltene wässrige Vorläuferlösung wurde mit 211,2 g Cellulosepulver (Vitacel^{®} L-600 von J.Rettenmaier und Söhne GmbH & Co KG) homogen zu einem orangefarbenen, frei fließfähigen imprägnierten partikulären Material vermischt. Zu dem frei fließfähigen imprägnierten partikulären Material wurden bei Raumtemperatur 705 mL einer einen pH-Wert von 13,9 aufweisenden wässrigen Hydrazinlösung [4,19 g (131 mmol) Hydrazin und 81,81 g einer 32gew.-%igen Natronlauge (654,51 mmol NaOH), Rest: Wasser] mit einer Dosiergeschwindigkeit von 30 mL/min unter Rühren zudosiert. Über die Zeit bildete sich ein immer besser rührbar werdender schwarzer homogener Brei. Nach Beendigung der Zudosierung wurde 30 Minuten nachgerührt, bis keine Stickstofffreisetzung mehr beobachtet werden konnte. Anschließend wurde das Material abgenutscht, mit insgesamt 1000 mL Wasser gewaschen und im Trockenschrank bei 105°C/300 mbar bis auf einen Restfeuchtegehalt von 15 Gew.-% getrocknet. Mittels ICP-OES wurde ein Silbergehalt von 18,9 Gew.-% und ein Rutheniumgehalt von 1,0 Gew.-% des Endproduktes (bezogen auf 0 Gew.-% Restfeuchte) bestimmt.

### Erfindungsgemäßes Beispiel 2 (Reduktive Herstellung eines mit 18,8 Gew.-% elementarem Silber und 1,0 Gew.-% elementarem Ruthenium ausgestatteten partikelförmigen anorganischen Materials):

Eine wässrige Lösung, zubereitet aus 52,5 g wässriger Silbernitrat-Lösung (Silberanteil 36,2 Gew.-%; 176 mmol Ag) und 5,4 g wässriger Rutheniumnitrosylnitrat-Lösung (Rutheniumanteil 18,7 Gew.-%; 10 mmol Ru), wurde zu einer Suspension aus 80 g Siliziumdioxid (Aerosil^{®} 150 von Evonik) in 1500 mL Wasser zugegeben. Diese Suspension wurde für 7 Stunden bei 80 °C gerührt. Anschließend wurde die Suspension auf 30 °C abgekühlt, eine Lösung bestehend aus 2,6 g Hydrazinhydrat (Hydrazingehalt 64 Gew.-%; 52 mmol), 32,2 g Natronlauge (Natriumhydroxidgehalt 32%) und 250 ml Wasser über einen Zeitraum von 10 Minuten hinzudosiert und weitere 5 Stunden gerührt. Anschließend wurde das Material abgenutscht, mit insgesamt 5 L Wasser gewaschen, im Trockenschrank bei 105°C/300 mbar getrocknet und mit einem Achatmörser gemahlen. Mittels ICP-OES wurde ein Silbergehalt von 18,8 Gew.-% und ein Rutheniumgehalt von 1,0 Gew.-% des Produktes (bezogen auf 0 Gew.-% Restfeuchte) bestimmt.

### Erfindungsgemäßes Beispiel 3 (Thermolytische Herstellung eines mit 18,3 Gew.-% elementarem Silber und 0,8 Gew.-% elementarem Ruthenium ausgestatteten partikelförmigen anorganischen Materials):

Eine wässrige Lösung, zubereitet aus 52,5 g wässriger Silbernitrat-Lösung (Silberanteil 36,2 Gew.-%; 176 mmol Ag) und 5,4 g wässriger Rutheniumnitrosylnitrat-Lösung (Rutheniumanteil 18,7 Gew.-%; 10 mmol Ru), wurde zu einer Suspension aus 80 g Siliziumdioxid (Aerosil^{®} 150 von Evonik) in 1500 mL Wasser zugegeben. Diese Suspension wurde für 7 Stunden bei 80 °C gerührt. Anschließend wurde das Material am Rotationsverdampfer bis zur Trockne eingeengt (90 °C/350 mbar). Das trockene Material wurde dann im Rohrofen für 5 Stunden unter Formiergasatmosphäre (5 Vol.-% Wasserstoff / 95 Vol.-% Stickstoff) bei 250 °C calciniert und mit einem Achatmörser zerkleinert. Mittels ICP-OES wurde ein Silbergehalt von 18,3 Gew.-% und ein Rutheniumgehalt von 0,8 Gew.-% des Produktes (bezogen auf 0 Gew.-% Restfeuchte) bestimmt.

### Erfindungsgemäßes Beispiel 4 (Thermolytische Herstellung eines mit 18,0 Gew.-% elementarem Silber und 1,0 Gew.-% elementarem Ruthenium ausgestatteten partikelförmigen anorganischen Materials):

Eine wässrige Lösung, zubereitet aus 8,8 g wässriger Silbernitrat-Lösung (Silberanteil 36,2 Gew.-%; 29 mmol Ag) und 0,9 g wässriger Rutheniumnitrosylnitrat-Lösung (Rutheniumanteil 18,7 Gew.-%; 1,7 mmol Ru), wurde unter Schütteln zu 40 g Böhmitpulver (Actilox^{®} 200SM von Nabaltec) zugegeben. Anschließend wurde das Material im Trockenschrank bei 105°C/300 mbar getrocknet. Dieser Prozess wurde dreimal wiederholt, bis insgesamt 26,2 g der wässrigen Silbernitrat-Lösung (Silberanteil 36,2 Gew.-%; 88 mmol Ag) und 2,7 g der wässrigen Rutheniumnitrosylnitrat-Lösung (Rutheniumanteil 18,7 Gew.-%; 5 mmol Ru) verwendet worden waren. Das Material wurde dann im Rohrofen für 5 Stunden unter Formiergasatmosphäre (5 Vol.-% Wasserstoff / 95 Vol.-% Stickstoff) bei 250 °C calciniert und mit einem Achatmörser zerkleinert. Mittels ICP-OES wurde ein Silbergehalt von 18,0 Gew.-% und ein Rutheniumgehalt von 1,0 Gew.-% des Produktes (bezogen auf 0 Gew.-% Restfeuchte) bestimmt.

### Beispiel 5 (Vergleichende Prüfung der Produkte aus Referenzbeispiel 1 und den erfindungsgemäßen Beispielen 2 und 3 auf ihre antimikrobielle Wirkung):

In verschiedenen Erlenmeyerkolben wurden je 30 mL einer Kultur von Methicillin-resistentem Staphylococcus aureus (MRSA) in Trypticase-Soja-Brühe-Medium (TSB) auf eine optische Dichte von 0,05 eingestellt. Anschließend wurden unterschiedliche Mengen des Produktes aus Referenzbeispiel 1 im Bereich von 1 bis 20 mg eingewogen. Die Proben wurden im Schüttelinkubator bei 37°C und 150 U/min inkubiert. Innerhalb von 6 Stunden wurde die optische Dichte bei einer Wellenlänge von 600 nm (OD600) in stündlichen Intervallen bestimmt.

Die Hemmung des Bakterienwachstums war durch eine verringerte Zunahme der optischen Dichte im Vergleich zur Kontrollprobe zu erkennen. Als Kontrollprobe diente eine MRSA-Kultur ohne Zusatz einer antimikrobiellen Wirksubstanz. Bei einer vollständigen Hemmung des Bakterienwachstums war keine Zunahme der optischen Dichte zu beobachten. Die entsprechende Probenmenge des Produktes aus Referenzbeispiel 1 respektive aus den erfindungsgemäßen Beispielen 2 bis 4 wurde zur Berechnung der minimalen Hemmkonzentration herangezogen. Dabei ergab sich eine minimale Hemmkonzentration für das Produkt aus Referenzbeispiel 1 von 0,55 mg/mL und eine im Vergleich dazu niedrigere minimale Hemmkonzentration für das Produkt aus dem erfindungsgemäßen Beispiel 2 von 0,40 mg/mL, aus dem erfindungsgemäßen Beispiel 3 von 0,40 mg/mL und aus dem erfindungsgemäßen Beispiel 4 von 0,35 mg/mL.

## Patentansprüche

1. Verfahren zur Herstellung eines mit elementarem Silber und elementarem Ruthenium ausgestatteten partikelförmigen anorganischen Materials mit einer durchschnittlichen Teilchengröße (d50) im Bereich von 50 nm bis 40 µm und einer BET-Oberfläche im Bereich von 1 bis 1600 m²/g,
wobei das anorganische Material als solches ausgewählt ist aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid, und
wobei eine getrocknete Zubereitung, welche vor ihrer Trocknung Wasser, Partikel aus einem entsprechenden anorganischen Material, mindestens einen Silbervorläufer und mindestens einen Rutheniumvorläufer umfasst hatte, unter einer reduzierenden Atmosphäre thermolytisch behandelt wird.

2. Verfahren nach Anspruch 1, wobei das mit elementarem Silber und elementarem Ruthenium ausgestattete partikelförmige anorganische Material einen durch das elementare Silber und das elementare Ruthenium gebildeten Silber-plus-Ruthenium-Gewichtsanteil im Bereich von 0,1 bis 50 Gew.-% bei einem zugleich herrschenden Silber: Ruthenium-Gewichtsverhältnis im Bereich von 1 bis 2000 Gewichtsteilen Silber: 1 Gewichtsteil Ruthenium aufweist.

3. Verfahren nach Anspruch 1 oder 2, wobei der Begriff "reduzierende Atmosphäre" eine Atmosphäre bestehend aus einem reduzierende Eigenschaften aufweisenden Gas oder eine Mischung von inertem Gas mit Wasserstoff bezeichnet.

4. Verfahren nach einem der vorhergehenden Ansprüche, wobei der mindestens eine Silbervorläufer ausgewählt ist aus der Gruppe bestehend aus Silberacetat, Silbersulfat und Silbernitrat und wobei der mindestens eine Rutheniumvorläufer ausgewählt ist aus der Gruppe bestehend aus Rutheniumoxalat, Rutheniumacetat und Rutheniumnitrosylnitrat.

5. Verfahren nach einem der vorhergehenden Ansprüche, wobei es sich bei den Partikeln aus dem anorganischen Material um Partikel mit einer durchschnittlichen Teilchengröße (d50) im Bereich von 50 nm bis 40 µm und einer BET-Oberfläche im Bereich von 1 bis 2000 m²/g aus einem Material ausgewählt aus der Gruppe bestehend aus Aluminiumnitrid, Titannitrid, Siliziumnitrid, alpha-Aluminiumoxid, Titandioxid in Form von Anatas, Titandioxid in Form von Rutil, pyrogenem Siliziumdioxid, gefälltem Siliziumdioxid, Natriumaluminiumsilikat, Zirkoniumsilikat, Zeolith, Hydrotalkit und gamma-Aluminiumoxidhydroxid handelt.

6. Verfahren nach einem der vorhergehenden Ansprüche, umfassend die aufeinanderfolgenden Schritte:
(1c) Bereitstellen einer Zubereitung umfassend Wasser, Partikel aus dem anorganischen Material, mindestens einen Silbervorläufer und mindestens einen Rutheniumvorläufer,
(2c) Trocknen der in Schritt (1c) bereitgestellten Zubereitung, und
(3c) thermolytische Behandlung der nach Beendigung von Schritt (2c) erhaltenen getrockneten Zubereitung unter reduzierender Atmosphäre.

7. Verfahren nach Anspruch 6, wobei die in Schritt (1c) bereitgestellte Zubereitung in Form einer wässrigen Suspension oder in Form imprägnierter Partikel vorliegt.

8. Verfahren nach einem der vorhergehenden Ansprüche, wobei das erhaltene mit elementarem Silber und elementarem Ruthenium ausgestattete partikelförmige anorganische Material zu einem aufgehellten partikelförmigen Material mit einer Helligkeit L* im Bereich von 50 bis 85 weiterverarbeitet wird, indem es mit mindestens einem C1-C4-Alkoxid von Aluminium, Magnesium, Calcium, Silizium, Zink, Zirkonium und/oder Titan in Gegenwart einer zur vollständigen Hydrolyse des mindestens einen C1-C4-Alkoxids mindestens hinreichenden Menge von Wasser in Kontakt gebracht wird.
